# EUROPÄISCHE PATENTSCHRIFT

(11) **EP 3 137 346 B1**
(45) Veröffentlichungstag und Bekanntmachung des Hinweises auf die Patenterteilung: **07.02.2018**
(21) Anmeldenummer: 15759625.5
(22) Anmeldetag: 11.04.2015
(51) Int. Cl.: B60R 22/32

(54) **RETTUNGSTRENNSTELLE BZW. BEFREIUNGSTRENSTELLE FÜR SICHERHEITS- UND SITZGURTSYSTEME**
EMERGENCY TEARING POINT OR LIBERATING TEARING POINT FOR SAFETY AND SEAT BELT SYSTEMS
POINT DE SECTIONNEMENT DE SECOURS OU POINT DE SECTIONNEMENT DE LIBÉRATION POUR SYSTÈMES DE CEINTURES DE SÉCURITÉ OU DE CEINTURES DE SIÈGE

(30) Priorität: 30.04.2014 DE 102014005987
(43) Veröffentlichungstag der Anmeldung: 08.03.2017
(73) Patentinhaber: Göppert, Helmut, 77948 Friesenheim Heiligenzell (DE); Ritter, Tino, 77933 Lahr (DE)
(72) Erfinder: RITTER, Tino, 77933 Lahr (DE)
(86) Internationale Anmeldenummer: PCT/DE2015/000180
(87) Internationale Veröffentlichungsnummer: WO 2015/192819

(56) Entgegenhaltungen:
- EP-A1- 0 318 376
- DE-A1- 2 705 311
- DE-U1- 8 432 988
- FR-A1- 2 363 337

## Beschreibung

Die Erfindung betrifft das Gurtband eines Sicherheits- bzw. Sitzgurtes, in welches eine Rettungstrennstelle eingearbeitet ist. Die Rettungstrennstelle ist eine mechanische Vorrichtung, wie in Abb. II. gezeigt.

Es ist allgemein bekannt, dass sich eine in einem verunglückten Fortbewegungsmitteln befindliche, an einem Gurtband gesicherte Person, schwer befreien lässt und sich diese unter schwierigen Umständen - wie einer Kopflage oder unter Wasser - orientierungslos außer Kraft sehen kann, sich selbst zu befreien, da sie den ordentlichen Öffnungsmechanismus des Sicherheits- bzw. Sitzgurtes unter Umständen nicht erreicht.
Dies gilt für alle fahrbaren und flugtauglichen Fortbewegungsmittel, in welchen Sicherheits- bzw. Sitzgurte zur Sicherheit der beförderten Personen eingesetzt werden.
Erreichen Rettungsdienste den ordentlichen Öffnungsmechanismus nicht, so setzen sie mitgeführte Schnittwerkzeuge zur Öffnung der Gurtsysteme ein. Ersthelfer dagegen und verunglückte Insassen, stehen der Situation oft hilflos gegenüber, da in nahezu keinem Fortbewegungsmittel Schnittwerkzeuge vorrätig, geschweige denn griffbereit sind.
So kam es in der Vergangenheit wiederholt vor, dass Insassen verunglückter Fortbewegungsmittel, bei Bewusstsein in ihren Fahrzeugen ertranken oder verbrannten, weil sie sich nicht rechtzeitig selbst befreien, oder durch Andere befreit werden konnten.
Es sind nun verschiedene Vorrichtungen im Stand der Technik bekannt, die zur Durchtrennung des Gurtbandes von Sicherheits- bzw. Sitzgurten in Fortbewegungsmitteln vorgesehen sind und dieses insbesondere mechanisch mittels einer Schneideklinge durchtrennen.

Eine derartige manuell zu betätigende mechanische Vorrichtung, zur Durchtrennung des Gurtbandes eines Sicherheits- bzw. Sitzgurtes in Fortbewegungsmitteln, ist aus den folgenden Eintragungen bekannt:
DE 10 2009 015 459 B3
DE 693 03 918 T2
DE 603 17 318 T2
DE 197 08 339 A1
FR 2 363 337 A1
DE 33 18 465 A1
Allen Eintragungen gemein ist, dass der Gurt mittels einer Schneidevorrichtung auf abweichende Arten getrennt wird, die durch Andere oder selbst betätigt, erst herbeigebracht werden muss, oder durch angegurtete Insassen, Ersthelfer oder Rettungsdienste nur schwer zu erreichen oder zu betätigen ist. Weiter sind die Schneidevorrichtungen nicht teil des Gurtbandes, sondern optionales Zubehör und befinden sich nur in einer Eintragung dauerhaft am Gurtband bzw. greifbar in dessen Nähe.
Des Weiteren haben alle Trennvorrichtungen nach heutigem Stand der Technik eine Zerstörung des gesamten Gurtbandes und die Notwendigkeit eines Komplettaustausches zu dessen Instandsetzung zur Folge. Dabei sind Situationen denkbar, in denen sich Insassen eines Fortbewegungsmittels schnell vom Gurt befreien wollen, ohne diesen irreversibel zerstören zu müssen, so z. B. in Notwehrsituationen in Fortbewegungsmitteln der ordnenden Verwaltung (Polizei, Millitär, etc.) oder in Fortbewegungsmitteln des öffenlichen Personennahverkehrs (z. B. Taxifahrer).

Ein möglicher Grund dafür, bis dato keine Rettungstrennstelle in das Gurtband integriert zu haben, mag in der Gefahr des Vandalismus oder in Schwierigkeiten der Aufwicklung des Gurtbandes gelegen haben.
Ein Gurttrennsystem welches die Idee der Wiederverschließbarkeit einer Gurttrennstelle vorsieht zeigt die gattungsbildende Patentanmeldung FR 2 363 337 A1. Für die Montage dieser Notentriegelung, die am Fahrzeugsicherheitsgurt angebracht ist, wird der Gurt nach der Konfektionierung in zwei Stücke geschnitten und deren Stöße mit ineinandergreifenden gegenüberliegend versetzten Schlaufen so geformt, dass die beiden Enden durch einen eingesetzten Stift verbunden werden können. Wird der einführte Stift im Bedarfsfall wieder aus den Schlaufen gezogen, ist das Gurtband durchtrennt. Die Trennstelle ist hier jedoch nicht in das Gurtgewebe integriert, sondern Verbindungsglied eines zunächst durchtrennten Gurtbandes.
Der Erfindung liegt daher die Aufgabe zu Grunde, eine gegenüber dem Stand der Technik verbesserten Sicherheitsgurt mit einer in den Gurt integrierten Vorrichtung zur Durchtrennung des Gurtbandes anzugeben.
Diese Solltrennstelle sei als Selbst- und Fremd- rettungstrennstelle (kurz Rettugstrennstelle) in den Gurt integriert.
Der Erfindung liegt daher weiter die Aufgabe zu Grunde, dass die Vorrichtung zur Durchtrennung in möglichst jeder Lage der angegurteten und gesicherten Insassen des Fortbewegungsmittels, durch die Insassen selbst oder durch Andere leicht erreichbar und zu betätigen ist.
Der Erfindung liegt daher weiter die Aufgabe zu Grunde, dass die Vorrichtung zur Durchtrennung des Gurtbandes, dieses nach Möglichkeit nicht zerstört, sondern dieses mit möglichst geringen Mitteln wieder instand setzen lässt.
Der Erfindung liegt daher weiter die Aufgabe zu Grunde, einem versehentlichen öffnen bestmöglich vorzubeugen.
Der Erfindung liegt daher weiter die Aufgabe zu Grunde, selbst nicht ein zusätzliches Verletzungsrisiko zu begründen.
Der Erfindung liegt daher weiter die Aufgabe zu Grunde, dass das Gurtband trotz integrierter Rettungstrennstelle nach Möglichkeit ganz oder teilweise aufrollbar ist.
Die Aufgabe ist erfindungsgemäß durch einen Sicherheits- bzw. Sitzgurt gelöst, der die im Ansprüch A 1 genannten Merkmale aufweist.
In das Gurtband des Sicherheits- bzw. Sitzgurtes ist eine oder mehr als eine Rettungstrennstelle eingearbeitet, welche im Brust- und/ oder Hüftgurtbereich des Gurtbandes verortet ist. Dabei ist das Gurtband an der Rettungstrennstelle fest verbunden und wird erst durch das Auslösen eines Öffnungsmechanismus aufgetrennt.
Gemäß einer Ausgestaltung des Erfindungsgemäßen Sicherheits- bzw. Sitzgurtes sind die Trennvorrichtungen an den Rettungstrennstellen derart in das Gurtband eingearbeitet, dass sie seine Beweglichkeit, Spannkrafteigenschaften und seine sonstige Sicherheit nicht nachteilig beeinträchtigen.
Gemäß einer Ausgestaltung des Erfindungsgemäßen Sicherheits- bzw. Sitzgurtes sind die Trennvorrichtungen an den Rettungstrennstellen derart in das Gurtband eingearbeitet, dass der Gurt teilweise oder ganz aufgerollt werden kann.
Gemäß einer Ausgestaltung des Erfindungsgemäßen Sicherheits- bzw. Sitzgurtes, ist ein Trenngewebe eine mögliche Trennvorrichtung an den Rettungstrennstellen, wie in Abb. II gezeigt. Zunächst wird das Trenngewebe an der, am einen Ende befestigte Schlaufe ruckartig aus dem Gurt gezogen. Dabei werden Gewebefasern so aus dem Gurtgewebe gerissen, dass sich das Gewebe an der Rettungstrennstelle entlang der Trennlinie auflöst und der Gurt durchtrennt ist und sich öffnet.
Das herausreißen des Trenngewebes macht einen Austausch des Gurtbandes notwendig, erhält den Gurt aber nach den bestehenden Regeln der Technik aufrollbar, ohne mechanische oder systematische Änderungen an den Gurtwickelrollen und deren Zugwegen und Gurtführungen vorzunehmen.

Die Ausführungsbeispiele werden anhand von Zeichnungen näher erläutert.
Der schwarzen Pfeile in den Grafiken kennzeichnet jeweils die Bewegungsrichtung der Bauteile oder zeigen auf eine Funktionstaste.

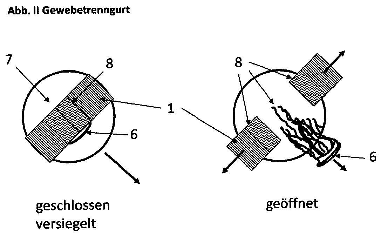

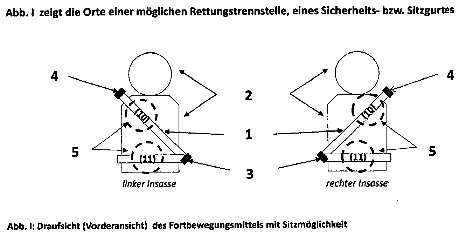

Abb. 1 zeigt die möglichen Positionen der Rettungstrennstellen, die vorzugsweise an den gezeigten Stellen anzubringen sind, da diese zentriert von beiden Seiten der gesicherten Insassen gleichermaßen zugänglich sind.
Die Rettungstrennstelle an der Brust erreicht ein gesicherter Insasse auch bei mäßiger Orientierung ohne Sicht oder unter Wasser, sofern er bei Bewusstsein und die Bewegungstauglichkeit der Arme gegeben ist, aus jeder Postion.
Eine versetzte, zu den Zeichnungen abweichende Verortung der Rettungstrennstellen am Hüftgurt oder im Brustgurtbereich ist dennoch denkbar und sei hier berücksichtigt.

Abb. II zeigt exemplarisch den Aufbau des Gurtbandes an der Stelle der Rettungstrennstelle, für den Fall des Trenngewebes.

Einnander entsprechende Bauteile sind in verschiedenen Abbildungen mit den gleichen Bezugszeichen versehen.

### Bezeichnungen in den Abbildungen:

- 1: Gurtband
- 2: Kopf und Oberkörper
- 3: unterer Umlenkpunkt
- 4: oberer Umlenkpunkt
- 5: Rettungstrennstelle im Brustgurt und/oder Hüftgurt
- 6: Zugring-, -schleife oder -öse (verformbar/ elastisch)
- 7: Trennlinie
- 8: Trenngewebe
- 9: Schutzhülle (aufreißbar)
- 10: Brustbereich
- 11: Hüftbereich

## Patentansprüche

1. Rettungstrennstellen (10,11) eines Sicherheits- und/oder Sitzgurtes, die **dadurch gekennzeichnet sind**
- **dass** ein Trenngewebe oder Gewebetrennfasern (8), in das Gurtband (1) eingewebt ist
- **dass** sich das Trenngewebe bei Zug an einer Trennschlaufe (6) an mindestens einer der Rettungstrennstellen (10, 11) löst und das Gurtband (1) auftrennt
- **dass** das Trenngewebe oder die Rettungstrennstelle (10, 11) bis zur Auftrennung durch eine Schutzhülle (9) umhüllt ist

2. Rettungstrennstelle wie in Anspruch A1 **dadurch gekennzeichnet dass** sich das Trenngewebe in Farbe und/oder sonstiger Materialbeschaffenheit vom Gewebe des sonstigen Gurtbandes unterscheidet

3. Rettungstrennstelle wie in Anspruch A1 **dadurch gekennzeichnet**
- **dass** die sichtbare Oberflächenbeschaffenheit, der Schutzhülle (9), so beschaffen ist, dass sie optisch erkennbar und/oder ertastbar ist
- **dass** sich die Schutzhülle mit einer Hand öffnen lässt

## Claims

1. Rescue separation points (10/11) of a safety and/or seat belt are characterized through
- a separating fabric or separation fibers (8), woven into the safety and/or seat belt (1)
- the possibility of separating the safety and/or seat belt (1) by means of pulling the separating device behind en eyelet (6) at at least one of the rescue separation points (10/11)
- the fact that before triggering them the separating fabric or the rescue separation points (10/11) are protected or sealed by a protective cover (9).

2. Rescue separation points (10/11) as in claim A 1 are characterized through the fact that the separating fabric or separation fibers differ from the rest of the belt in color and/or material properties.

3. Rescue separation points (10/11) as in claim A 1 are characterized through the fact that the
- visible surface of the protective cover (9) of the separating fabric or separation fibers can be recognized visually and/or haptically
- protective cover can be teared off with the action of one hand only.

## Revendications

1. Points de séparation de sauvetage (10,11) d'une ceinture de sécurité et/ou de siège qui sont **caractérisés par le fait**
- **qu'**un tissu de séparation ou des fibres de séparation soient tissés dans la ceinture (1)
- **que** par traction d'un tirant à au moins un point de séparation de sauvetage (10/11) le tissu de séparation se défasse et dénoue la ceinture (1)
- **que** le tissu de séparation ou le point de séparation de sauvetage soient, jusqu'au moment du dénouement, entourés d'une housse de protection (9)

2. Point de séparation de sauvetage comme dans Droits de brevet A 1 **caractérisé par le fait**
- **que** le tissu de séparation diffère du matériel du tissu de la ceinture par la couleur et / ou d'autres caractéristiques du matériel

3. Point de séparation de sauvetage comme dans Droits de brevet A1 **caractérisé par le fait**
- **que** la surface visible de la housse protectrice (9) soit reconnaissable par sa consistance visible et /ou palpable
- **que** la housse protectrice se laisse ouvrir par une seule main
